# EUROPEAN PATENT SPECIFICATION

(11) **EP 0 419 207 B1**
(45) Date of publication and mention of the grant of the patent: **20.07.1994**
(21) Application number: 90310191.3
(22) Date of filing: 18.09.1990
(51) Int. Cl.: F16D 66/02

(54) **Friction lining condition monitoring system**
Überwachungssystem für die Beschaffenheit eines Reibbelages
Système de surveillance pour la condition d'une garniture de friction

(30) Priority: 20.09.1989 GB 8921250
(43) Date of publication of application: 27.03.1991
(73) Proprietor: LUCAS INDUSTRIES PUBLIC LIMITED COMPANY, Solihull, West Midlands B91 3TX (GB)
(72) Inventor: Taylor, Alfred James, Solihull, West Midlands B92 9PF (GB); Hirst, Terence, Solihull, West Midlands B92 9PJ (GB)
(74) Representative: Spall, Christopher John

(56) References cited:
- EP-A- 0 145 324
- WO-A-84/00407
- FR-A- 2 319 880
- FR-A- 2 574 508

## Description

This invention relates to a new or improved system for monitoring the condition of a mechanism incorporating a lining of friction material, suitably a brake or clutch assembly.

Systems for indicating the condition of linings of friction material are well known but most known systems involve a modification to the linings themselves, which is a hindrance in manufacture.

For example in US-A-3 958 445 and in FR-A-2 574 508 each system includes a device which is embedded in and extends between opposite front and rear faces of a friction lining. Each device is electrically conductive in nature so that, as the lining wears, the device wears to a similar extent accompanied by a change in its electrical resistance. This change can be measured to give an indication of the wear condition of the lining.

In the system of US-A-3 958 445 the device comprises a probe of an electrically conductive material which is embedded in the lining material. The probe has a relatively high bulk resistively so that, as the lining wears, the resistance of the probe changes accordingly.

In the system of FR-A-2 574 508 the device comprises a strip of flexible insulating material which is coiled into a cylinder which extends through an opening in the lining. The material may be provided with a resistive track, or with a plurality of resistances in parallel, suitably conductive tracks parallel to the front face of the lining. Thus the electrical resistance of the strip changes as it wears with the lining.

In the system known from DE-A-1 924 998 a brake pad of friction material is mounted on the outer face of a rigid plate, and a electrically conductive lining wear sensor mounted on or adjacent to the outer face of the rigid plate encircles a major portion of the circumferential edge of the brake pad. A signal is emitted by the sensor to give an indication that the pad has reached a worn condition, but only when the sensor is contacted by the disc during a brake application.

We are also aware of FR-A- 2 319 880 which discloses several wear level detection devices comprising detector circuits or conductor components engraved or printed on the side of a pad in the form of a resistance or small resistive surfaces in parallel. A considerable number of connections are provided between the components and wear monitoring means. The detection devices are therefore in the form of a matrix which gives indication of wear in a digital form.

According to our invention in a system for monitoring the condition of a mechanism incorporating a lining of friction material having front and rear faces and a circumferential edge extending between the faces, which system employs a wear detecting element of electrically conductive material which is worn together with the friction lining and whose change in electrical resistance is adapted to provide an indication of the condition of the friction lining, the wear detecting element comprises a discrete measuring strip adapted to extend along the circumferential edge of the lining to which it is adapted to be attached, whereby the system is adapted to detect continuous wear of the friction material.

The change in resistance can be measured by contacts at the free ends of the strip.

Since the strip is electrically continuous across its width, the system is continuously detecting wear.

By using a continuous strip we are able to reduce to a minimum the number of electrical connections between the strip and the wear monitoring means.

The strip may cover a part of the edge, for example its radially outermost portion, or it may comprise a strip adapted to encircle substantially the total length of the circumferential edge.

The strip is secured to the edge by the use of a suitable adhesive.

In one construction the strip comprises an inner layer of insulating material secured to the edge of the lining, an intermediate layer of resistive material, and an outer insulating/protective layer.

The inner layer may comprise a polymer/kelvar insulation, the intermediate layer may comprise carbon, and the outer layer may comprise alumina, conveniently applied using a vacuum physical vapour deposition technique.

When resistive material is chosen to have a large temperature coefficient of resistance we are then able to monitor temperature changes in the strip and, in consequence, in the friction material itself.

When the mechanism comprises a vehicle brake in which a braking member is adapted to be applied to a rotatable member, monitoring temperature changes in the strip can be used to provide a measurement of the brake operating temperature. For example, lining wear could be sampled immediately the vehicle is started from cold, and the corresponding resistive value stored electronically. During vehicle use, the electrical resistance could again be sampled after application of the brake, and a comparison with the 'cold' resistance would allow the temperature of the lining material to be calculated for a given temperature coefficient of resistance of the lining material.

The knowledge of brake operating temperatures can be used to provide an indication of the operating characteristics of the brake. For example, if, after a predetermined interval of time, a sampled temperature showed little increase from that sampled at the start, this might indicate that the friction lining was not being applied correctly to the disc, in as much as the braking member might have jammed or became misaligned. Similarly if the temperature comparison was higher than predicted, this might indicate that the friction lining was in continuous rubbing contact with the rotatable member for example that a retraction mechanism was ineffective.

During brake application the system will be inoperative since the measuring strip will short circuit itself on the disc. Readings are therefore sampled when the brake is in a 'off' position. However should an accumulation of dust and the like collect at the trailing edge of the braking member and cause a short circuit, it may be necessary to construct the strip of parallel alternate resistive and insulating materials.

When the friction member comprise a friction pad assembly of a vehicle disc brake comprising a pad of friction material carried by a rigid backing plate, the strip is secured to the circumferential edge of the pad and extends from the backing plate to the front face of the pad.

The system of the invention can be applied to standard friction pad assemblies without any modification to the pad assemblies themselves.

A known friction pad assembly and one embodiment of our invention are illustrated in the accompanying drawings in which:-
Figure 1 is a front elevation of a know friction pad assembly for a vehicle 'spot' type disc brake;
Figure 2 is a plan view of the same;
Figure 3 is a perspective view of system for monitoring the condition of a brake incorporating the friction pad assembly; and
Figure 4 is a flow chart/computer program for the system of Figure 3.

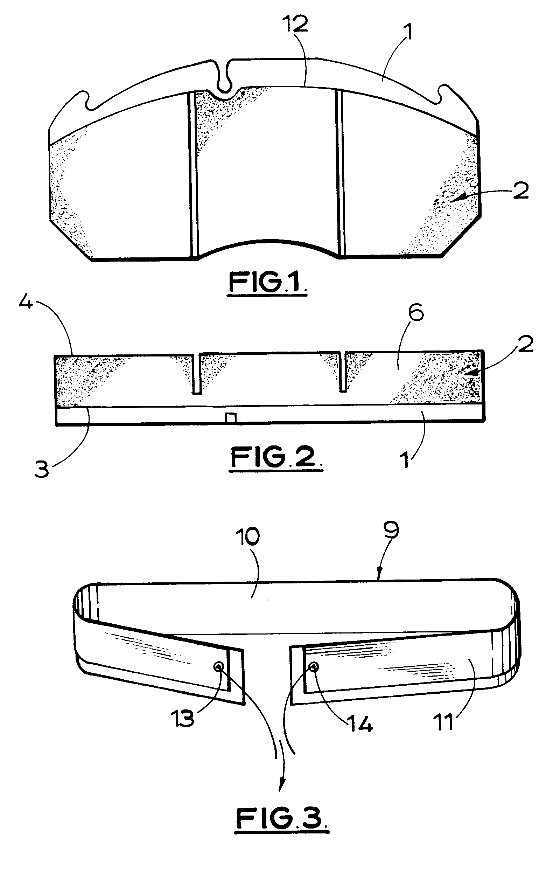

The known friction pad assembly illustrated in Figures 1 and 2 of the accompanying drawings comprises a rigid metal backing plate 1 which is mounted, for example for axial sliding movement, in a caliper of the brake, and a pad 2 defining a lining of friction material and having spaced parallel inner and outer faces 3, 4. The inner face 3 of the pad is fixedly secured to the backing plate 1, and the outer face 4 of the pad is adapted to engage a rotatable braking member comprising a rotatable disc (not shown). The caliper straddles the peripheral edge of the disc in a known manner. The pad 2 has a circumferentially extending peripheral edge 6 which extends between the inner face 3 and the outer face 4.

The pad assembly is adapted to be fitted with the system of Figure 3. As illustrated the system comprises a discrete layered strip 9 comprising an inner layer 10 of insulating material, suitably polymer/kelvar, an intermediate coated layer 11 of resistive material, suitably carbon, and a top insulating/protective layer in the form of a coating such as alumina which is applied to the strip using a vacuum physical vapour deposition technique. The three layers are superimposed upon each other and are of substantially constant width throughout their lengths.

The strip 9 is wrapped around the edge 6 of the friction pad 2 with the inner layer 10 in contact with the edge and the strip 9 is secured to the pad 2 by a suitable adhesive between the inner layer 10 and the pad.

The strip 9 may extend only along the radially outermost upper portion 12 of the edge. Alternatively it may encircle a major length of the edge 6, including the upper portion 12.

In either arrangement the strip 9 extends between the inner and outer faces 3, 4 of the pad 2, and electrical contacts 13, 14 at opposite ends of the layer 11 are connected to an electric power supply.

As the pad 2 wears in use, the surrounding strip 9 will wear substantially to the same or similar extent, reducing the coated surface area 11. This, in turn, will create an increase in the electrical resistance which will be progressive as the pad 2 wears and can be measured by the contacts 13, 14.

During brake application with the outer face 4 of the pad 2 in engagement with 'the disc', the system will short circuit itself. Thus all readings are taken when the pad assembly is in a retracted position spaced from the disc.

To avoid inadvertent short circuits occurring when the pad assembly is in the retracted position due to the build-up of dust and the like at the trailing end of the pad 2, the intermediate layer 11 of resistive material is constructed with alternate strips of resistive and insulating materials.

By using a resistive material with a large coefficient of resistance, the temperature change in the strip 9, and hence in the pad 2, can be monitored.

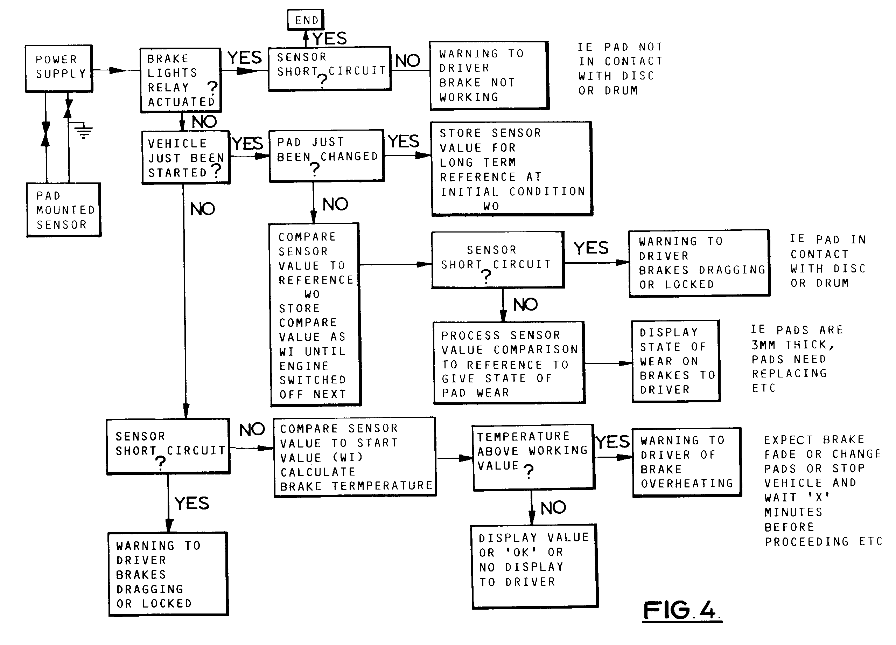

For example, as shown in the flow chart/computer program of Figure 4, brake wear could be sampled immediately upon start and the resistive value stored. During vehicle use the resistance could again be sampled after application of the brakes and comparison with the cold resistance would allow the temperature to be calculated for a friction lining having a known temperature coefficient of resistance.

The availability of such braking temperatures can now be used to determine brake conditions.

For example if, after a predetermined time, a sampled temperature shows little increase from that sampled at the start, this could mean that the pad assembly 1 had become jammed or misaligned since it was not contacting the disc evenly.

Similarly if the temperature prediction was higher than predicted, this would indicate that the friction pad 2 was continually rubbing on the disc.

## Claims

1. A system for monitoring the condition of a mechanism incorporating a lining (2) of friction material having front and rear faces (3, 4) and a circumferential edge (6) extending between the faces, by employing a wear detecting element of electrically conductive material which is worn together with the friction lining (2) and whose change in electrical resistance is adapted to provide an indication of the condition of the friction lining, characterised in that the wear detecting element comprises a discrete measuring strip (9) adapted to extend along the circumferential edge (6) of the lining (2) to which it is adapted to be attached, whereby the system is adapted to detect continuous wear of the friction material.

2. A system according to claim 1, characterised in that the change in resistance is adapted to be measured by contacts (13, 14) at the free ends of the strip (9).

3. A system according to claim 1 or claim 2, characterised in that the strip (9) is adapted to cover a part of the edge.

4. A systems according to claim 3, characterised in that the strip (9) is adapted to cover the radially outermost portion of the edge.

5. A system according to claim 1 or claim 2, characterised in that the strip (9) is adapted to encircle substantially the total length of the circumferential edge of the lining (2).

6. A system according to any preceding claim, characterised in that the strip (9) is adapted to be secured to the edge by a suitable adhesive.

7. A system according to any preceding claim, characterised in that the strip (9) comprises an inner layer (10) of insulating material adapted to be secured to the edge of the lining (2), an intermediate layer (11) of resistive material, and an outer insulating/protective layer.

8. A system according to claim 7, characterised in that the inner layer (10) comprises a polymer/kelvar insulation, the intermediate layer (11) comprises carbon, and the outer layer comprise alumina.

9. A system according to claim 8, characterised in that the alumina is applied using a vacuum physical vapour deposition technique.

10. A system according to any of claims 7-9, characterised in that the resistive material (11) is chosen to have a large temperature coefficient of resistance whereby temperature changes in the strip and, in consequence, in the friction material itself, can be monitored.

11. A system according to any preceding claims, characterised in that the mechanism comprises a vehicle brake in which a braking nember is adapted to be applied to a rotatable member and monitoring temperature changes in the strip (9) are adapted to be used to provide a measurement of the brake operating temperature.

12. A friction pad assembly for a vehicle disc brake comprising a pad (2) of friction material carried by a rigid backing plate (1), and a system according to any preceding claim, characterised in that the strip (9) is secured to the circumferential edge of the pad (2) and extends from the backing plate to the front face of the pad.

## Patentansprüche

1. System zur Überwachung des Zustands einer Einrichtung, die einen Belag (2) aus Reibmaterial mit vorderen und rückseitigen Flächen (3, 4) und einem sich zwischen den Flächen erstreckenden, umlaufenden Rand (6) aufweist, durch Verwenden eines Abnutzungserfassungsteils aus elektrisch leitendem Material, das zusammen mit dem Reibbelag (2) abgenutzt wird und dessen Änderung des elektrischen Widerstands eine Angabe über den Reibbelagzustand liefert,
dadurch gekennzeichnet, daß das Abnutzungserfassungsteil einen gesonderten Meßstreifen (9) aufweist, der zum Erstrecken um den umlaufenden Rand (6) des Belags (2) vorgesehen ist, an dem er anbringbar ist, wodurch das System eine fortlaufende Abnutzung des Reibmaterials feststellen kann.

2. System nach Anspruch 1,
dadurch gekennzeichnet, daß die Änderung des Widerstands mittels Kontakten (13, 14) an den freien Enden des Streifens (9) meßbar ist.

3. System nach Anspruch 1 oder Anspruch 2,
dadurch gekennzeichnet, daß der Streifen (9) zum Bedecken eines Teils des Rands vorgesehen ist.

4. System nach Anspruch 3,
dadurch gekennzeichnet, daß der Streifen (9) zum Bedecken des radial äußersten Teils des Rands vorgesehen ist.

5. System nach Anspruch 1 oder Anspruch 2,
dadurch gekennzeichnet, daß der streifen (9) dazu vorgesehen ist, im wesentlichen die Gesamtlänge des umlaufenden Rands des Belags (2) zu umgeben.

6. System nach einem der vorhergehenden Ansprüche,
dadurch gekennzeichnet, daß der Streifen (9) dazu vorgesehen ist, am Rand mittels eines geeigneten Klebstoffs befestigt zu werden.

7. System nach einem der vorhergehenden Ansprüche,
dadurch gekennzeichnet, daß der Streifen (9) eine innere Schicht (10) aus isolierendem Material, die am Rand des Belags (2) befestigbar ist, eine Zwischenschicht (11) aus Widerstandsmaterial und eine äußere Isolier-/Schutzschicht aufweist.

8. System nach Anspruch 7,
dadurch gekennzeichnet, daß die innere Schicht (10) eine Polymer/Kevlar-Isolierung, die Zwischenschicht (11) Kohlenstoff und die äußere Schicht Aluminiumoxid aufweist.

9. System nach Anspruch 8,
dadurch gekennzeichnet, daß das Aluminiumoxid mittels eines Vakuum-PVD-Verfahren aufgebracht wird.

10. System nach einem der Ansprüche 7 bis 9,
dadurch gekennzeichnet, daß das Widerstandsmaterial (11) so gewählt ist, daß es einen großen Widerstands/Temperaturkoeffizienten hat, wodurch Temperaturänderungen im Streifen und folglich auch im Reibmaterial selbst überwacht werden können.

11. System nach einem der vorhergehenden Ansprüche,
dadurch gekennzeichnet, daß die Einrichtung eine Fahrzeugbremse umfaßt, in der ein Bremsglied an ein drehbares Bauteil anlegbar ist, und eine Überwachung von Temperaturänderungen im Streifen (9) für eine Messung der Betriebstemperatur der Bremse benutzbar ist.

12. Reibbelaganordnung für eine Fahrzeug-Scheibenbremse, mit einem Belag (2) aus Reibmaterial, der von einer starren Trägerplatte (1) getragen wird, und einem System nach einem der vorhergehenden Ansprüche,
dadurch gekennzeichnet, daß der Streifen (9) am umlaufenden Rand des Belags (2) befestigt ist und sich von der Trägerplatte zur vorderen Fläche des Belags erstreckt.

## Revendications

1. Système pour surveiller l'état d'un mécanisme comprenant une garniture (2) en matériau de friction ayant des faces avant et arrière (3, 4) et un bord circonférentiel (6) s'étendant entre les faces, par l'utilisation d'un élément de détection d'usure en matériau électriquement conducteur qui subit l'usure conjointement à la garniture de friction (2) et dont une modification de résistance électrique est adaptée pour fournir une indication de l'état de la garniture de friction, caractérisé en ce que l'élément de détection d'usure comprend un ruban discret de mesure (9) qui est prévu afin de s'étendre le long du bord circonférentiel (6) de la garniture (2) et de se fixer audit bord, de sorte que le système est adapté pour détecter l'usure continue du matériau de friction.

2. Système selon la revendication 1, caractérisé en ce que la modification de résistance est adaptée pour être mesurée au moyen de contacts (13, 14) situés aux extrémités libres du ruban (9).

3. Système selon la revendication 1 ou 2, caractérisé en ce que le ruban (9) est adapté pour couvrir une partie du bord.

4. Système selon la revendication 3, caractérisé en ce que le ruban (9) est adapté pour couvrir la portion radialement la plus à l'extérieur du bord.

5. Système selon la revendication 1 ou 2, caractérisé en ce que le ruban (9) est adapté pour entourer sensiblement la longueur totale du bord circonférentiel de la garniture (2).

6. Système selon l'une quelconque des revendications précédentes, caractérisé en ce que le ruban (9) est adapté pour être fixé au bord au moyen d'un adhésif adéquat.

7. Système selon l'une quelconque des revendications précédentes, caractérisé en ce que le ruban (9) comprend une couche interne (10) en matériau d'isolation et qui est adaptée pour être fixée au bord de la garniture (2), une couche intermédiaire (11) en matériau résistif, et une couche externe d'isolation et de protection.

8. Système selon la revendication 7, caractérisé en ce que la couche interne (10) comprend une isolation au polymère/kelvar, la couche intermédiaire (11) comprend du carbone, et la couche externe comprend de l'alumine.

9. Système selon la revendication 8, caractérisé en ce que l'alumine est appliquée en utilisant une technique de dépôt en phase gazeuse par procédé physique.

10. Système selon l'une quelconque des revendications 7 à 9, caractérisé en ce que le matériau résistif (11) est choisi afin d'avoir un grand coefficient de température de résistance de façon à ce que des modifications de température dans le ruban et, par conséquent, dans le matériau de friction lui-même, puissent être surveillées.

11. Système selon l'une quelconque des revendications précédentes, caractérisé en ce que le mécanisme comprend un frein de véhicule dans lequel un élément de freinage est adapté pour être appliqué à un élément tournant, et en ce que des modifications de température de surveillance dans le ruban (9) sont adaptées pour être utilisée afin de fournir une mesure de la température de fonctionnement du frein.

12. Assemblage de plaquette de friction pour un frein à disque de véhicule comprenant une plaquette (2) en matériau de friction portée par une plaque rigide de fixation (1), et un système selon l'une quelconque des revendications précédentes, caractérisé en ce que le ruban (9) est fixé au bord circonférentiel de la plaquette (2) et s'étend de la plaque de fixation à la face avant de la plaquette.
